**Europäisches Patentamt**

**European Patent Office**

**Office européen des brevets**

(19)

(11) Veröffentlichungsnummer : **0 377 685 B1**

(12)

# EUROPÄISCHE PATENTSCHRIFT

(45) Veröffentlichungstag der Patentschrift :
**28.10.92 Patentblatt 92/44**

(21) Anmeldenummer : **89904508.2**

(22) Anmeldetag : **26.04.89**

(86) Internationale Anmeldenummer :
**PCT/CH89/00075**

(87) Internationale Veröffentlichungsnummer :
**WO 89/10703 16.11.89 Gazette 89/27**

(51) Int. Cl.⁵ : **A23L 2/30,** C13D 3/16,
C13J 1/08, B01D 61/58,
C12H 1/16, C12G 3/08

---

(54) **Verfahren zum selektiven Entfernen von gewissen Stoffen aus Getränken.**

---

(30) Priorität : **04.05.88 CH 1672/88**

(43) Veröffentlichungstag der Anmeldung :
**18.07.90 Patentblatt 90/29**

(45) Bekanntmachung des Hinweises auf die
Patenterteilung :
**28.10.92 Patentblatt 92/44**

(84) Benannte Vertragsstaaten :
**AT DE FR GB IT NL**

(56) Entgegenhaltungen :
EP-A- 0 047 518
EP-A- 0 174 594
FR-A- 2 190 918
GB-A- 2 163 062
US-A- 3 865 960
US-A- 3 997 357

(73) Patentinhaber : **BUCHER-GUYER AG
Maschinenfabrik
CH-8166 Niederweningen (CH)**

(72) Erfinder : **GRESCH, Walter
Boletstrasse 390
CH-8166 Niederweningen (CH)**

## Beschreibung

Die Erfindung betrifft ein Verfahren zum selektiven Entfernen von Zucker und/oder Säure und/oder Fehlgeschmack verursachende Stoffen aus nichtalkoholischen oder alkoholischen Getränken oder zuckerhaltigen Lösungen unter Verwendung von Membrantrennverfahren.

Das hauptsächliche Anwendungsgebiet der Erfindung ist die Entzuckerung von vorwiegend alkoholfreien Getränken und daneben auch die Entsäuerung und allgemeine Veredelung von sowohl alkoholfreien als auch alkoholischen Getränken (z.B. Wein, Bier) aus Naturprodukten wie Obst, Früchte, Beeren, Trauben, Gemüse, Getreide, Soja und Produkten der Viehhaltung, z.B. Milch. Mit der allgemeinen Veredelung ist vorwiegend die Entfernung von Fehlgeschmack und Säure gemeint. Die oben erwähnten zu entfernenden Stoffe sind nichtflüchtig. Parallel mit der Entfernung der erwähnten nichtflüchtigen Stoffe können auch flüchtige Stoffe, z.B. Fehlaroma, falls erwünscht, mitentfernt werden. Der Anteil an den gesamten zu entfernenden Stoffe beträgt hier weniger als 25%. Entzuckerung und in geringerem Masse auch die Entsäuerung und Veredelung von Getränken dient dem Zweck, dem Bedürfnis der Verbraucher nach weniger Kalorien, weniger Süssigkeit, Eignung für Diabetiker, weniger Säure etc. nachzukommen.

Es sind bereits verschiedene chemische Verfahren zur Entzuckerung bekannt geworden. Die DE-PS 22'32'093 befasst sich mit der Gewinnung von Zucker aus Melasse nach dem Ionenausschlussharz-Verfahren. Hierbei wird die zuckerhaltige Melasse über eine mit Ionenaustauschharz gefüllte Kolonne geführt, wodurch der Zucker ausgeschieden wird. Ein weiteres Verfahren zur Gewinnung von Saccharose aus Melasse ist durch die US-PS 3'997'357 bekannt. Die zuckerhaltige Melasse wird mit Kalk vermischt und durch anschliessendes Filtern die Saccharose gewonnen. Schliesslich zeigt die EP-OS 0'047'518 ein Verfahren, bei dem die Saccharose durch Kontakt der zuckerhaltigen Mischung mit Adsorbern gewonnen wird.

Diese bekannten, chemischen Verfahren ergeben eine ungenügende Qualität für Getränke-Zwecke, da die Entzuckerung zu wenig selektiv ist. Das Ziel dieser Verfahren ist vor allem die Gewinnung von Zucker, weshalb die Selektivität von untergeordneter Bedeutung ist.

Die Anwendung von Membrantrennverfahren ist bei der Entalkoholisierung von Getränken an sich bekannt. Hierbei werden die flüchtigen Alkoholstoffe durch die Membran in das Permeat abgeführt. Diese bekannten Verfahren zur Entalkoholisierung sind jedoch nicht ohne weiteres auf das Entfernen von Zucker aus Getränken wegen des wesentlich höheren Molekulargewichtes und der nichtflüchtigen Verbindungen wie Zucker, Säure, Geschmacksstoffe übertragbar und für diesen Zweck auch nicht geeignet. Für die Entalkoholisierung mittels Membranverfahren, müssen deshalb Membranen mit sehr niedrigen Trenngrenzen eingesetzt werden. Bei Anwendung von Umkehrosmose und Umkehrosmose kombiniert mit Dialyse, liegt es im Bereiche der reinen Umkehrosmose, z.B. 92-99 % Salz-Rückhalt, bezogen auf 0,5 % wässrige Na Cl-Lösung, 40 bar Transmembrandruck und 20 Grad C Prozesstemperatur. Ferner erfolgt die Abtrennung von Alkohol aus dem Permeat-Kreislauf mittels sog. Flüssig-Flüchtig-Trennverfahren, z.B. Destillation, nichtflüchtige Komponenten, wie Zucker, Säure, Geschmacksstoffe lassen sich damit nicht selektiv abtrennen.

Auch zum Zurückhalten von schädlichen Mikroorganismen in einem UF Retentat ist gemäss EP-A1-0'174'594 (Lawhon et al.) bereits die Verwendung von Membrantrennverfahren bekannt. Dabei wird Ultrafiltration verwendet, um vorzugsweise ein Ultrafiltrations- Permeat durchzulassen, welches Geschmacks- und Aroma- Komponenten enthält und um die schädlichen Mikroorganismen zurückzuhalten. Das UF Retentat wird dann in einer Inaktivierungs-Stufe behandelt, um eine hinreichende Anzahl schädlicher Mikroorganismen zu inaktivieren, damit Schaden am Saft unter Lagerbedingungen verhindert wird. Ein UF Permeat, welches Geschmack und Aroma- Komponenten enthält, wird dann mit dem UF Retentat rekombiniert, um lagerfähigen Saft als Nahrungsmittel zu erhalten, wobei Verluste oder Verfremdungen an gewünschten Geschmacks- und Aroma- Komponenten des frischen Saftes vermieden werden, wie sie bei konventioneller Saftverarbeitung vorkommen.

Schliesslich sind aus US-3'865'960 (Wucherpfennig et al.) Membrantrennverfahren zur Stabilisierung von Tartar, d.h. zur Verhinderung des Ausfallens von Kalium- Bitartrat in Wein, Traubenmost oder Traubensaft bekannt, indem man diese Flüssigkeiten elektrodialysiert. Dies erfolgt an Membranen, welche Kalium- und Tartrat- Ionen durchlassen mit einer Flüssigkeit auf der Gegenseite, deren osmotischer Druck im wesentlichen der gleiche ist, wie jener des Weines, Traubenmostes oder Traubensaftes, welcher elektrodialysiert wird.

Der Erfindung liegt die Aufgabe zugrunde, die genannten Nachteile zu vermeiden und ein Verfahren der eingangs erwähnten Art zu schaffen, das bei hoher Wirtschaftlichkeit eine Verbesserung der Qualität des Endprodukts gewährleistet.

Diese Aufgabe wird gemäss der Erfindung dadurch gelöst, dass nach der Durchführung des Membrantrennverfahrens der abgetrennte Stoff aus dem Permeat oder der zurückgehaltene Stoff aus dem Retentat durch für Abtrennung nichtflüchtiger Stoffe geeignete physikalische sowie chemische oder biotechnologische Verfahren entfernt oder umgewandelt wird und anschliessend die nach dem Entfernen oder Umwandeln übrig gebliebenen Stoffe mindestens teilweise wieder in den Prozess oder zum Endprodukt zurückgeführt werden.

Die Leistung der Anlage wird erhöht, wenn das Membrantrennverfahren aus einer Kombination von Dialyse und Umkehrosmose besteht und die Abtrennung durch erhöhten Transmembrandruck und durch Konzentrationsdifferenz erfolgt.

Vorteilhafterweise liegt der Trennbereich der Membrantrennanlage im Grenzbereich von niedermolekular und makromolekular bzw. im Grenzbereich von Umkehrosmose und Ultrafiltration.

Nach einem weiteren Ausführungsmerkmal der Erfindung arbeitet die Membrantrennanlage nach dem Ultrafiltrationsverfahren mit einer Trenngrenze entsprechend einem Molekulargewicht von maximal $5000 \exp(-27)$ kg, d.h. 5000 Dalton.

Zum Entfernen des Stoffes aus dem Permeat oder aus dem Retentat der Membrantrennanlage können mit Vorteil bekannte u.a. für Abtrennung nichtflüchtiger Stoffe anwendbare physikalische Verfahren wie chromotographische Verfahren, Schichtenfilter, geschmacksverändernde Kellerbehandlungsverfahren sowie Flüssig/Flüssig-Extraktionsverfahren sowie chemische Verfahren wie chemische Ausfäll-Verfahren eingesetzt werden.

Für die Stoff-Entfernung durch Stoff-Umwandlung werden vorteilhafterweise biotechnologische Verfahren wie Fermentation sowie enzymatische Verfahren angewandt.

Nach einem weiteren Merkmal der Erfindung ist das Permeat der Membrantrennanlage mindestens teilweise im Kreislauf geführt und die Einrichtung zur Stoff-Entfernung oder Stoff-Umwandlung im Permeatkreislauf angeordnet.

Die Leistung der Anlage wird dadurch verbessert, dass das Permeat nach der Stoff-Entfernung oder Stoff-Umwandlung mindestens teilweise in das Retentat nach der Membrantrennanlage zurückgeführt wird.

Zur Herstellung eines mehr oder weniger süssen, entalkoholisierten oder leicht alkoholischen Getränks ist nach einem Ausführungsbeispiel der Erfindung im Permeatkreislauf der Membrantrennanlage ein Fermenter angeordnet, in welchem der im Permeat enthaltene Zucker in Alkohol umgewandelt wird, dass der Alkohol vorzugsweise in einer anschliessenden Entalkoholisierungseinrichtung oder mittels Extraktion durch Zuführung eines zweiten Getränks mindestens teilweise entfernt wird und das entzukkerte und entalkoholisierte oder leicht alkoholische Permeat wieder in den Permeatkreislauf nach dem Fermenter zurückgeführt wird.

Um zu verhindern, dass zu viel Aromastoffe in das Permeat diffundieren, ist gemäss einem weiteren Ausführungsbeispiel der Erfindung der Membrantrennanalge eine ebenfalls nach dem Membranverfahren arbeitende Trenneinrichtung vorgeschaltet, in die der Rohsaft eingeleitet und als Retentat zur Retentatseite der Membrantrennanlage geführt wird, wobei das die Armomastoffe enthaltende Permeat in das Retentat nach der Membrantrennanlage eingeleitet wird.

Zweckmässigerweise liegt die Trenngrenze der vorgeschalteten Trenneinrichtung tiefer als die Trenngrenze der Membrantrennanlage, jedoch ebenfalls im Grenzbereich von Umkehrosmose und Ultrafiltration.

In einer anderen Ausführungsform der Erfindung erfolgt die Stoff-Entfernung oder Stoff-Umwandlung auf der Retentatseite nach der Membrantrennanlage. Dabei wird die Membran der Membrantrennanlage zweckmässigerweise so gewählt, dass das Permeat vorwiegend die im Endprodukt erwünschten und das Retentat die zu entfernenden oder umzuwandelnden Stoffe enthält.

Neben einer Anwendung für Getränke lässt sich das Verfahren auch zur Isolierung und Anreicherung von Zucker bei der Gewinnung von Zucker aus zuckerhaltigen Lösungen, insbesondere im Zusammenhang mit einer Zuckerlösung, gewonnen durch den enzymatischen Abbau von Zellulose, z.B. aus Holz, anwenden.

Bei einer besonders vorteilhaften Ausführung der Erfindung zur Herstellung eines alkoholfreien oder alkoholreduzierten Getränks wird der im Retentat der Membrantrennanlage enthaltene Zucker durch Fermentation in Alkohol umgewandelt, der Alkohol durch eine anschliessende Entalkoholisierung mindestens teilweise entfernt und danach die im Permeat enthaltenen Aromastoffe, Extrakte, Salze, Säuren etc. dem Retantat nach der Fermentation und Entalkoholisierung wieder zugeführt.

Die mit der Erfindung erzielten Vorteile bestehen insbesondere darin, dass durch die Kombination von Membrantrennverfahren und anschliessender Stoffenfernung oder Stoffumwandlung eine hohe Selektivität und damit Qualität erzielt wird. Das nach dem erfindungsgemässen Verfahren entzuckerte und/oder entsäuerte Getränk weist eine hohe Qualität auf und ist weitgehend besonderen Verbraucherbedürfnissen angepasst. Das erfindungsgemässe Verfahren ermöglicht auch eine Veredelung des Getränks durch die Entfernung von Fehlgeschmack, der durch die Verwertung von schlechtem Rohmaterial, ungünstige Verarbeitung oder zu lange Lagerung entstehen kann.

Die Entzuckerung und Veränderung des Verhältnisses von Zucker zu Säure ermöglicht eine weitere Anspassung an spezifische Verbraucher-Bedürfnisse, z.B. durch Herstellung spezieller, durstlöschender Getränke wie Apfelsaft mit wenig Zucker und einem erhöhten Säure/Zucker-Verhältnis. Ausserdem lässt sich je nach Trennbereich der Membrane ein Produkt mit gutem Gehalt an Farbstoffen, Extraktionsstoffen, Gerbstoffe etc. erzielen. Neben dem Geschmack lässt sich als Nebeneffekt auch das Aroma positiv beeinflussen, z.B. durch bei der Fermentation entstehenden die neuen interessanten Aromastoffe oder durch herausnehmen von Fehlaroma mittels z.B. Ad- und Absorbtionsverfahren.

Die Erfindung ist in der folgenden Beschreibung und der Zeichnung, die mehrere Ausführungsbeispiele darstellt, näher erläutert. Es zeigen:

Fig. 1 eine schematische Darstellung der erfindungsgemässen Anlage mit Stoff-Entfernung bzw. Stoff-Umwandlung auf der Permeatseite,

Fig. 2 die Anlage nach Fig. 1 mit Entzucke rung durch Fermentation sowie einer Einrichtung zur Aroma-Rückgewinnung und

Fig. 3 ein weiteres Ausführungsbeispiel mit Stoff-Entfernung bzw. Stoff-Umwandlung auf der Retentatseite.

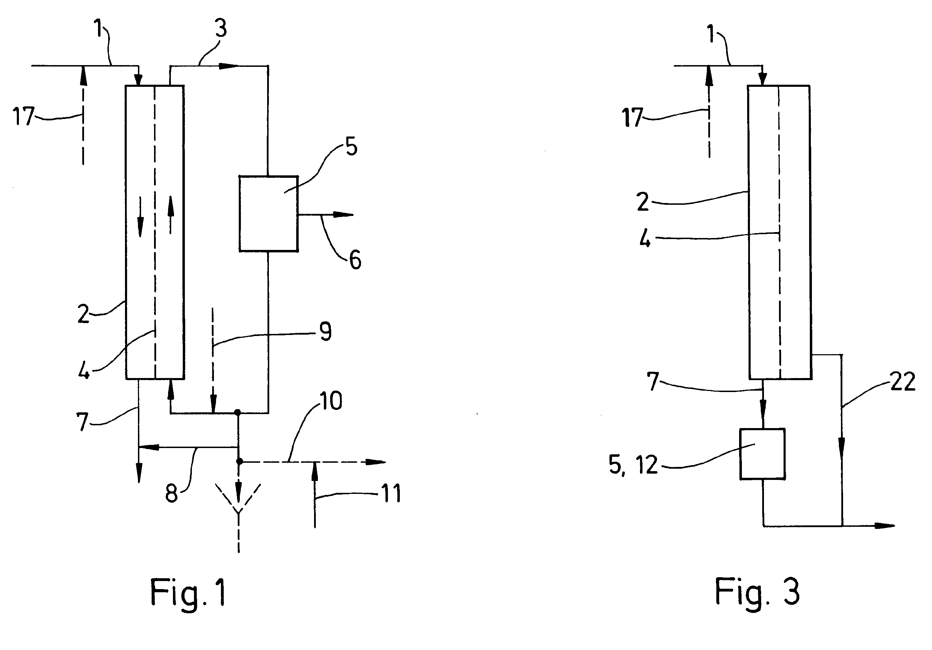

Der Rohsaft, dem der Zucker entzogen werden soll, wird gemäss Fig. 1 über eine Leitung 1 einer Membrantrennanalge 2 zugeführt. Die Membrantrennanlage 2 besteht aus einer kombinierten Dialyse/Umkehrosmose-Anlage, bei der das Permeat im Gegenstrom zum Retentat fliesst. Die Anlage ist mit einem Spezialmodul ausgerüstet, der einen Permeatkreislauf 3 im Gegenstrom zum Retentatstrom ermöglicht. Es ist jedoch auch die Verwendung einer Ultrafiltrationsanlage mit dem gleichen Spezialmodul möglich. Der bevorzugte Trennbereich der Membrantrennanlage 2 liegt im Grenzbereich von niedermolekular und makromolekular, also im Grenzbereich zwischen Umkehrosmose und Ultrafiltration, deren maximale Trenngrenze 5000 Dalton beträgt. In diesem Bereich werden Farbstoffe noch zurückgehalten. Ferner passieren makromolekulare Stoffe, z.B. Extraktstoffe, Polyphenole etc. die Membran 4 der Membrantrennanlage 2 in stark verringertem Masse.

Im Permeatkreislauf 3 ist eine Einrichtung 5 zur selektiven Stoff-Entfernung oder Stoff-Umwandlung angeordnet. Über eine Leitung 6 werden die zu entfernenden oder umzuwandelnden Stoffe wie z.B. Zucker, Säure, Fehlgeschmack, Alkohol aus Zucker, Salze aus Zucker oder Säure etc. abgeführt. Das im Gegenstrom zum Retentat fliessende Permeat ist im Kreislauf geführt und wird an der unteren Permeatseite wieder in die Membrantrennanlage 2 eingeleitet. Das von dem unerwünschten Stoff befreite Getränk verlässt als Retentat über eine Leitung 7 die Membrantrennanlage 2. Ein Teil des Permeats wird nach der Entfernung des Stoffes über eine Leitung 8 wieder in das Retentat nach der Membrantrennanlage 2 zurückgeführt.

In der Einrichtung 5 wird der im Permeat enthaltene Zucker, Säure oder Fehlgeschmacksstoff durch den Einsatz physikalischer, chemischer oder biotechnologischer Verfahren entfernt oder in getränkeverträgliche Stoffe umgewandelt. Dadurch, dass die Membran 4 der Membrantrennanlage 2 in der Trenngrenze wo gewählt ist, dass primär die zu entfernenden Stoffe diffundieren und zusätzlich auf die Permeatseite ein selektives Stoffentfernungsverfahren eingesetzt wird, entsteht insgesamt eine erhöhte Selektivität gegenüber den einzelnen Schritten. Bei Anwendung von einzelnen Schritten besteht die Gefahr, dass zu viel herausgenommen wird.

Die Einrichtung 5 zur selektiven Stoffentfernung kann beispielsweise in bekannter Weise nach dem Ausfäll-Verfahren arbeiten. Insbesondere zur Entfernung von Zucker kann das bekannte Stefan-Verfahren oder ähnliche Prozesse eingesetzt werden. Zur Entfernung von Säure eignen sich die bekannten Kellerbehandlungsmethoden, sowie enzymatische Verfahren. Ausserdem lassen sich auch chromatografische Verfahren, wie z.B. das Ionen-Ausschlussverfahren zur Entfernung von Zucker einsetzen. Zur Entfernung von Fehlgeschmack sind z.B. Ad- und Absorptionsverfahren, z.B. mittels Aktiv-Kohle, geeignet. Ferner können Schichtenfilter verwendet werden, wobei die Eigenschaft der Filterschichten ausgenutzt wird, nicht nur rein mechanisch zu filtrieren, sondern auch Kolloide zu binden. Im Prinzip lassen sich zur Stoff-Entfernung auch alle geschmacksverändernden resp. veredelnden Kellbehandlungs-Verfahren und -Mittel einsetzen. Dabei ist die Wirkung beim erfindungsgemässen Verfahren gegenüber konventionellen Verfahren sanfter, da nur das Permeat behandelt wird.

Schliesslich kann die Stoff-Entfernung auch mittels Flüssig/Flüssig-Extraktion durchgeführt werden. Hierzu wird dem Permeatkreislauf 3 Mineralwasser und/oder wenigstens ein weiteres Getränk sowie eventuelle Zusatzstoffe über eine Leitung 9 zugeführt. Beide Flüssigkeiten werden mit dem zu entfernenden Stoff, z.B. Zucker, im Permeatkreislauf 3 angereichert und über eine Leitung 10 als weiteres Getränk, das jetzt den aus dem ersten Getränk entfernten Zucker enthält, abgeführt. Über eine Leitung 11 können dem weiteren Getränk noch Zusätze beigemischt werden. Das erste, entzuckerte Getränk verlässt als Retentat durch die Leitung 7 die Membrantrennanlage 2. Zur Verstärkung des Stoffaustausches lassen sich auch entsprechende Extraktionsapparate in bekannter Ausführung einsetzen.

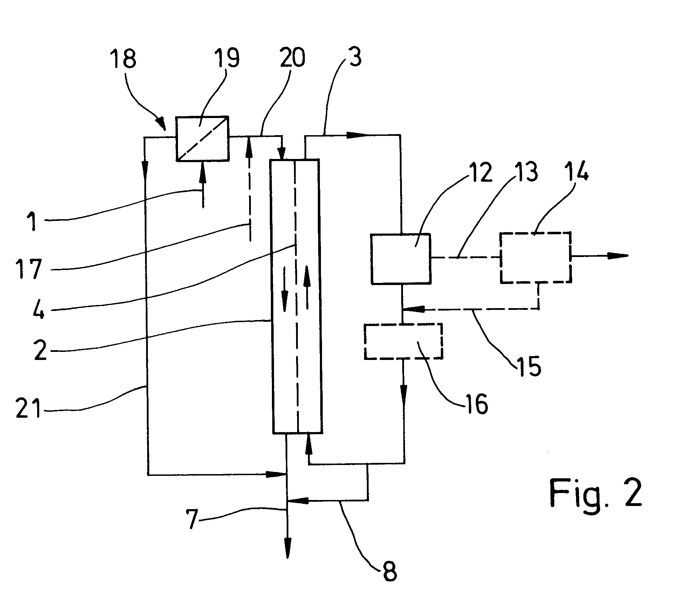

Anstelle der Stoff-Entfernung kann in der Einrichtung 5 auch eine Stoff-Umwandlung durchgeführt werden. Hierzu sind die im Getränkesektor bereits gebräuchlichen biotechnologischen Verfahren besonders geeignet. Gemäss Fig. 2 ist im Permeatkreislauf 3 ein Fermenter 12 angeordnet, der den im Permeat enthaltenen Zucker in Alkohol umwandelt. Falls die Herstellung eines leicht alkoholischen Getränkes erwünscht ist, wird der Alkohol im Permeat belassen. Da höchstens so viel Alkohol entsteht, wie entsprechend Zucker im Permeat ist, ergibt sich je nach Wunsch ein mehr oder weniger süsses alkoholisches Getränk. Dadurch erübrigt sich eine Zugabe von fremden Lösungsmitteln wie es nach einer Entalkoholisierung mit herkömmlichen Verfahren oft notwendig ist, um wieder auf einen gewünschten Körper des Getränkes zu kommen.

Soll dagegen der Alkohol reduziert werden, kann das Permeat durch den Einsatz bekannter Verfahren ganz oder teilweise entalkoholisiert werden. Hierzu wird das mit Alkohol angereicherte, fermentierte Permeat über eine Leitung 13 einer Entalkoholisierungsanlage 14 zugeführt, in welcher der Alkohol entfernt wird. Das entalkoholisierte Permeat wird über eine Leitung 15 wieder in den Permeatkreislauf 3 nach dem Fermenter 12 eingeleitet. Das entzuckerte und entalkoholisierte Permeat wird zusammen mit Wasser, Extrakte, Säure, Salze, Aromareste einschliesslich neuer Aromastoffe aus der Fermentation in die untere Permeatseite der Membrantrennanlage 2 eingeleitet und ein Teil davon über die Leitung 8 ins Retentat zurückgeführt.

Im Permeatkreislauf 3 kann ein Entsäuerungsprozess 16 vorgesehen werden, in welchem dem Permeat zusätzlich oder alternativ zur Entzuckerung Säure entzogen wird.

Anstelle der Entalkoholisierungsanlage 14 kann analog zu der bereits beschriebenen Entzuckerung durch Flüssig/Flüssig-Extraktion der Alkohol durch Zuführen eines zweiten Getränks aus dem Permeat herausextrahiert und damit ein zweites, alkoholisches Getränk gewonnen werden.

Als weitere Massnahme zur Stoff-Umwandlung können auch enzymatische Verfahren in der Einrichtung 5 durchgeführt werden. Zu diesen Verfahren zählt beispielsweise die sog. Navinginase, die zur Entbitterung von Grapefruit-Saft eingesetzt und bekannt geworden ist. Da die Enzyme auf der Permeatseite praktisch nicht verloren gehen, bedeuten die enzymatischen Verfahren gleichzeitig auch eine Kosteneinsparung.

Zur Kompensation des Wassers, das zusammen mit den zu entfernenden Stoffen durch die Membran 4 der Membrantrennanlage 2 ins Permeat diffundiert, wird dem Rohsaft vor seinem Eintritt in die Membrantrennanlage 2 über eine Leitung 17 Getränke-Verdünnungswasser zugeführt. Eine weitere Kompensation des Wassers ist dadurch gegeben, dass ein Teil des entzuckerten oder umgewandelten Permeats über die Leitung 8 in das Retentat zurückgeführt wird.

Die Anlage nach Fig. 2 kann zusätzlich mit einer Aroma-Rückgewinnungseinrichtung 18 ausgerüstet werden. Diese besteht aus einer der Membrantrennanlage 2 vorgeschalteten Trenneinrichtung 19, die vorzugsweise zur Vermeidung einer qualitätsschädigenden Wärmebelastung des Getränkes ebenfalls nach dem Membrantrennverfahren arbeitet. Über die Leitung 1 wird der Rohsaft in die Trenneinrichtung 19 eingeleitet und gelangt als Retentat über eine Leitung 20 in die Membrantrennanlage 2. Das vorwiegend aus Aromastoffen und etwas Zucker bestehende Permeat der Trenneinrichtung 19 wird über eine Leitung 21 nach der Membrantrennanlage 2 in das Retentat zurückgeführt. Dadurch wird verhindert, dass z.B. bei der Entzukkerung und/oder Entsäuerung zu viele Aromastoffe durch die Membran 4 der Membrantrennanlage 2 ins Permeat diffundieren und bei der Behandlung auf der Permeatseite geschädigt werden oder verloren gehen. Eine solche Einrichtung ist angebracht, wenn aus Gründen der Leistung mit relativ hohen Drücken gefahren wird oder eine extrem hohe Qualität erzielt werden soll. Eine hohe Konzentrierung und hohe Trennschärfe ist nicht erforderlich, da das entzogene Aroma sofort wieder dem Retentatstrom zugeführt wird. Voraussetzung ist allerdings, dass der Saft nicht nachträglich konzentriert wird. Die Trenneinrichtung 19 besitzt vorzugsweise eine etwas tiefere Trenngrenze als die Membrantrennanlage 2, liegt aber vorzugsweise auch im Übergangsbereich von Umkehrosmose und Ultrafiltration.

In Fig. 3 ist ein Ausführungsbeispiel der Erfindung dargestellt, bei dem die Einrichtung 5 zur selektiven Stoff-Entfernung oder Stoff-Umwandlung im Retentatstrom nach der Membrantrennanlage 2 angeordnet ist. Durch entsprechende Wahl der Membran 4 verbleiben im Retentat, das die Membrantrennanlage 2 über die Leitung 7 verlässt, vorwiegend die zu entfernenden Stoffe. Für eine Entzuckerung liegt die Trenngrenze der Membran 4 vorzugsweise im Uebergangsbereich von Umkehrosmose und Ultrafiltration. Das Permeat, das über die Leitung 22 abfliesst, enthält vorwiegend die im Endprodukt erwünschten Stoffe. Dies hat den Vorteil, dass das Getränk keine Veränderungen infolge der Behandlungsmethoden zur Stoff-Entfernung oder Stoff-Umwandlung erfährt. Für die auf der Retentatseite stattfindende Stoff-Entfernung bzw. Stoff-Umwandlung gilt das gleiche wie in den Ausführungsbeispielen gemäss Fig. 1 und 2 beschrieben.

Erfolgt im Ausführungsbeispiel nach Fig. 3 die Stoff-Umwandlung zur Entzuckerung eines bestimmten Getränks durch Fermentation, also durch den Einsatz des Fermenters 12, so lässt sich dadurch ein Getränk mit leichtem Alkoholgehalt, wenig Zucker und einem hohen Gehalt an Aroma, Extrakte, Säuren und Salze des ursprünglichen Getränks herstellen. Der im Retentat durch entsprechende Wahl der Membran 4 zurückgehaltene Zucker wird im Fermenter 12 in Alkohol umgewandelt. Durch eine anschliessende Entalkoholisierung wird der Alkoholgehalt zumindest reduziert. Die hierbei auftretenden Aromaverluste sind gering, da die im ursprünglichen Getränk enthaltenen Aromastoffe, Extrakte, Salze, Säuren und die in geringem Masse Zucker schon vorher zusammen mit dem Wasser in das Permeat diffundieren, das dem Retentat nach der Entzuckerung und Entalkoholisierung wieder zugeführt wird und zusammen mit dem Retentat das neue alkoholreduzierte oder alkoholfreie, entzuckerte Getränk bildet.

Es besteht auch die Möglichkeit, die Anlage nach Fig. 3 mit der Anlage nach Fig. 1 oder 2 zu kombinieren.

**Patentansprüche**

1. Verfahren zum selektiven Entfernen von Zucker und/oder Säure und/oder Fehlgeschmack verursachende Stoffenaus nichtalkoholischen oder alkoholischen Getränken oder zuckerhaltigen Lösungen unter Verwendung von Membrantrennverfahren, wobei nach der Durchführung des Membrantrennverfahrens der abgetrennte Stoff aus dem Permeat oder der zurückgehaltene Stoff aus dem Retentat durch für Abtrennung nichtflüchtiger Stoffe geeignete physikalische sowie chemische oder biotechnologische Verfahren entfernt oder umgewandelt wird und anschliessend die nach dem Entfernen oder Umwandeln übrig gebliebenen Stoffe mindestens teilweise wieder in den Prozess oder zum Endprodukt zurückgeführt werden.

2. Verfahren nach Anspruch 1, dadurch gekennzeichnet, dass das Membrantrennverfahren aus einer Kombination von Dialyse und Umkehrosmose besteht und die Abtrennung durch erhöhten Transmembrandruck und durch Konzentrationsdifferenz erfolgt.

3. Verfahren nach Anspruch 1 oder 2, dadurch gekennzeichnet, dass der Trennbereich der Membrantrennanlage (2) im Grenzbereich von niedermolekular und makromolekular bzw. im Grenzbereich von Umkehrosmose und Ultrafiltration liegt.

4. Verfahren nach einem der Ansprüche 1 bis 3, dadurch gekennzeichnet, dass die Membrantrennanlage (2) nach dem Ultrafiltrationsverfahren arbeitet und eine Trenngrenze entsprechend einem Molekulargewicht von maximal $5000*1,66*10exp(-27)$ kg, d.h. 5000 Dalton aufweist.

5. Verfahren nach einem der Ansprüche 1 bis 4, dadurch gekennzeichnet, dass das Entfernen des Stoffes aus dem Permeat oder aus dem Retentat der Membrantrenn-anlage (2) durch chemisches Ausfällen erfolgt.

6. Verfahren nach einem der Ansprüche 1 bis 4, dadurch gekennzeichnet, dass zum Entfernen des Stoffes aus dem Permeat oder aus dem Retentat chromatographische Verfahren verwendet werden.

7. Verfahren nach einem der Ansprüche 1 bis 4, dadurch gekennzeichnet, dass zum Entfernen des Stoffes aus dem Permeat oder aus dem Retentat Ad- und Absorptionsverfahren eingesetzt werden.

8. Verfahren nach einem der Ansprüche 1 bis 4, dadurch gekennzeichnet, dass zum Entfernen des Stoffes aus dem Permeat oder aus dem Retentat Schichtenfilter verwendet werden.

9. Verfahren nach einem der Ansprüche 1 bis 4, dadurch gekennzeichnet, dass zum Entfernen des Stoffes aus dem Permeat oder aus dem Retentat geschmacksverändernde resp. veredelnde Kellerbehandlungs-Verfahren und -Mittel verwendet werden.

10. Verfahren nach einem der Ansprüche 1 bis 4, dadurch gekennzeichnet, dass das Entfernen des Stoffes aus dem Permeat oder aus dem Retentat durch Flüssig/Flüssig-Extraktion erfolgt.

11. Verfahren nach einem der Ansprüche 1 bis 4, dadurch gekennzeichnet, dass das Entfernen des Stoffes aus dem Permeat oder aus dem Retentat durch Stoffumwandlung mittels biotechnologischer Verfahren erfolgt.

12. Verfahren nach Anspruch 11, dadurch gekennzeichnet, dass die Stoffumwandlung durch Fermentation erfolgt.

13. Verfahren nach einem der Ansprüche 1 bis 4, dadurch gekennzeichnet, dass das Entfernen des Stoffes aus dem Permeat oder aus dem Retentat durch Stoffumwandlung mittels enzymatischer Verfahren erfolgt.

14. Verfahren nach einem der Ansprüche 1 bis 13, dadurch gekennzeichnet, dass das Permeat der Membrantrennanlage (2) mindestens teilweise im Kreislauf geführt ist und die Einrichtung (5) zur Stoff-Entfernung oder Stoff-Umwandlung im Permeatkreislauf (3) angeordnet ist.

15. Verfahren nach Anspruch 14, dadurch gekennzeichnet, dass das Permeat nach der Stoff-Entfernung oder Stoff-Umwandlung mindestens teilweise in das Retentat nach der Membrantrennanlage (2) zurückgeführt wird.

16. Verfahren nach einem der Ansprüche 1 bis 15, dadurch gekennzeichnet, dass im Permeatkreislauf (3) ein Fermenter (12) angeordnet ist, in welchem der im Permeat enthaltene Zucker in Alkohol umgewandelt wird, der Alkohol in einer anschliessenden Entalkoholisierungseinrichtung (14) oder mittels Extraktion durch Zuführung wenigstens eines weiteren Getränks mindestens teilweise entfernt wird und das entzuckerte und entalkoholisierte oder alkoholische Permeat wieder in den Permeatkreislauf (3) nach dem Fermenter (12) zurückgeführt wird.

17. Verfahren nach einem der Ansprüche 1 bis 16, dadurch gekennzeichnet, dass der Membrantrennanlage (2) eine ebenfalls nach dem Membranverfahren arbeitende Trenneinrichtung (19) vorgeschaltet ist, in die der Rohsaft eingeleitet und als Retentat zur Retentatseite der Membrantrennanlage (2) geführt wird, wobei das die Aromastoffe enthaltende Permeat in das Retentat nach der Membrantrennanlage (2) eingeleitet wird.

18. Verfahren nach Anspruch 17, dadurch gekennzeichnet, dass die Trenngrenze der vorgeschalteten Trenneinrichtung (19) tiefer als die Trenngrenze der Membrantrennanlage (2), jedoch im Grenzbereich von Umkehrosmose und Ultrafiltration liegt.

19. Verfahren nach einem der Ansprüche 1 bis 18, dadurch gekennzeichnet, dass die Stoff-Entfernung oder Stoff-Umwandlung auf der Retentatseite nach der Membrantrennanlage (2) erfolgt.

20. Verfahren nach Anspruch 19, dadurch gekennzeichnet, dass die Trenngrenze der Membran (4) der Membrantrennanlage (2) so gewählt wird, dass das Permeat vorwiegend die im Endprodukt erwünschten und das Retentat die zu entfernenden oder umzuwandelnden Stoffe enthält.

21. Verfahren nach Anspruch 19, dadurch gekennzeichnet, dass zur Herstellung eines alkoholfreien oder alkoholreduzierten Getränkes der im Retentat enthaltene Zucker durch Fermentation in Alkohol umgewandelt, der Alkohol durch eine anschliessende Entalkoholisierung mindestens teilweise entfernt wird und danach die im Permeat enthaltenen Aromastoffe, Extrakte, Salze, Säuren dem Retentat wieder zugeführt werden.

## Claims

1. Process for selective removal of sugar and/or acid and/or materials causing unpleasant taste from non-alcoholic or alcoholic beverages or sugar-containing solutions using membrane separation processes, wherein, after carrying out the membrane separation process, the separated material is removed or converted from the permeate or the retained material is removed or converted from the residue by physical and chemical or biotechnological processes suitable for separating non-volatile materials, and then the materials remaining after removal or conversion are at least partly recycled to the process or to the end product.

2. Process according to claim 1, characterised in that the membrane separation process comprises a combination of dialysis and reverse osmosis and the separation takes place as a result of increased transmembrane pressure and due to a difference in concentration.

3. Process according to claim 1 or 2, characterised in that the separating region of the membrane separation installation (2) lies in the boundary region of low molecular and macromolecular or in the boundary region of reverse osmosis and ultrafiltration.

4. Process according to one of claims 1 to 3, characterised in that the membrane separation installation (2) operates by the ultrafiltration process and has a separation limit corresponding to a molecular weight of maximum $5,000*1,66*10\exp(-27)$ kg, that is 5,000 daltons.

5. Process according to one of claims 1 to 4, characterised in that the removal of the material from the permeate or from the residue of the membrane separation installation (2) is carried out by chemical precipitation.

6. Process according to one of claims 1 to 4, characterised in that chromatographic processes are used to remove the material from the permeate or from the residue.

7. Process according to one of claims 1 to 4, characterised in that adsorption and absorption processes are used to remove the material from the permeate or from the residue.

8. Process according to one of claims 1 to 4, characterised in that sheet filters are used to remove the material from the permeate or from the residue.

9. Process according to one of claims 1 to 4, characterised in that taste-modifying or taste-refining cellar treatment processes and agents are used to remove the material from the permeate or from the residue.

10. Process according to one of claims 1 to 4, characterised in that removal of the material from the permeate or from the residue is carried out by liquid-liquid extraction.

11. Process according to one of claims 1 to 4, characterised in that removal of the material from the permeate or from the residue is carried out by conversion of the material by means of biotechnological processes.

12. Process according to claim 11, characterised in that the conversion of material is carried out by fermentation.

13. Process according to one of claims 1 to 4, characterised in that removal of the material from the permeate or from the residue is carried out by conversion of material by means of enzymatic processes.

14. Process according to one of claims 1 to 13, characterised in that the permeate from the membrane separation installation (2) is at least partly recycled and the device (5) is arranged in the permeate circuit (3) to remove material or to convert material.

15. Process according to claim 14, characterised in that after removal of material or conversion of material, the permeate is at least partly recycled to the residue downstream of the membrane separation installation (2).

16. Process according to one of claims 1 to 15, characterised in that a fermenter (12), in which the sugar contained in the permeate is converted to alcohol, is arranged in the permeate circuit (3), the alcohol being at least partly removed in a subsequent dealcoholisation device (14) or by means of extraction by supplying at least one further beverage, and the de-sugared and de-alcoholised or alcoholic permeate is recycled to the permeate circuit (3) downstream of the fermenter (12).

17. Process according to one of claims 1 to 16, characterised in that a separation device (19) also operating by the membrane process is provided upstream of the membrane separation installation (2), into which separation device (19) the crude juice is introduced and passed as residue to the residue side of the membrane separation installation (2), wherein the permeate containing the aromatic substances is introduced into the residue downstream of the membrane separation installation (2).

18. Process according to claim 17, characterised in that the separation limit of the separation device (19) provided upstream is lower than the separation limit of the membrane separation installation (2), but is in the boundary region between reverse osmosis and ultrafiltration.

19. Process according to one of claims 1 to 18, characterised in that removal of material or conversion of material is carried out on the residue side downstream of the membrane separation installation (2).

20. Process according to claim 19, characterised in that the separation limit of the membrane (4) in the membrane separation installation (2) is selected so that the permeate predominantly contains the materials required in the end product and the residue contains the materials to be removed or converted.

21. Process according to claim 19, characterised in that the sugar contained in the residue is converted to alcohol by fermentation to produce an alcohol-free or reduced-alcohol beverage, the alcohol being at least partly removed by subsequent dealcoholisation and then the aromatic substances, extracts, salts, acids contained in the permeate are recycled to the residue.

## Revendications

1. Procédé pour l'élimination sélective de sucre et/ou acides et/ou substances provoquant un goût indésiré de boissons non-alcoolisées ou alcoolisées, ou de solutions contenant du sucre, en utilisant des procédés de séparation à membrane, selon lequel, après l'exécution du procédé de séparation à membrane, on élimine ou on transforme la substance séparée, contenue dans le perméat, ou la substance retenue, contenue dans le rétentat, par des procédés physiques ainsi que chimiques ou biotechniques convenant pour la séparation de substances non-volatiles, puis, après l'élimination ou la transformation, on renvoie les substances résiduelles au moins partiellement dans le processus ou vers le produit final.

2. Procédé selon la revendication 1, caractérisé en ce que le procédé de séparation à membrane consiste en une combinaison d'une dialyse et d'une osmose inverse et la séparation s'effectue par une pression transmembrane accrue et par différence de concentration.

3. Procédé selon la revendication 1 ou 2, caractérisé en ce que la plage de séparation de l'installation de séparation à membrane (2) se trouve dans le domaine limite entre faible poids moléculaire et macromoléculaire, ou dans le domaine limitrophe d'une osmose inverse et d'une ultrafiltration.

4. Procédé selon une des revendications 1 à 3, caractérisé en ce que l'installation de séparation à membrane (2) fonctionne selon le procédé d'ultrafiltration et présente un seuil de coupure correspondant à un poids moléculaire de tout au plus 5000∗1, 66∗10exp( -27) kg, c'est-à-dire 5000 Dalton.

5. Procédé selon une des revendications 1 à 4, caractérisé en ce que l'élimination de la substance du perméat ou du rétentat de l'installation de séparation à membrane (2) s'effectue par précipitation chimique.

6. Procédé selon une des revendications 1 à 4, caractérisé en ce que, pour éliminer la substance du perméat ou du rétentat, on utilise des procédés chromatographiques.

7. Procédé selon une des revendications 1 0 4, caractérisé en ce que, pour éliminer la substance du perméat ou du rétentat, on applique les procédés d'adsorption et d'absorption.

8. Procédé selon une des revendications 1 à 4, caractérisé en ce que, pour éliminer la substance du perméat ou du rétentat, on utilise des filtres à couches.

9. Procédé selon une des revendications 1 à 4, caractérisé en ce que, pour éliminer la substance du perméat. ou du rétentat, on utilise des procédés et des moyens de traitement Keller modifiant ou ennoblissant le goût.

10. Procédé selon une des revendications 1 à 4, caractérisé en ce que l'élimination de la substance du perméat ou du rétentat s'effectue par extraction liquide/ liquide.

11. Procédé selon une des revendications 1 à 4, caractérisé en ce que l'élimination de la substance du perméat ou du rétentat s'effectue par transformation de matière au moyen de Procédés biotechniques.

12. Procédé selon la revendication 11, caractérisé en ce que la transformation de matière s'effectue par fermentation.

13. Procédé selon une des revendications 1 à 4, caractérisé en ce que l'élimination de la substance du perméat ou du rétentat s'effectue par transformation de matière au moyen de procédés enzymatiques.

14. Procédé selon une des revendications 1 à 13, caractérisé en ce que l'on recycle au moins partiellement le perméat de l'installation de séparation à membrane (2) et on dispose le dispositif (5) pour l'élimination ou la transformation de la substance dans le circuit de perméat (3).

15. Procédé selon la revendication 14, caractérisé en ce que, après l'élimination ou la transformation de la substance, on renvoie le perméat au moins partiellement dans le rétentat en aval de l'installation de séparation à membrane (2).

16. Procédé selon une des revendications 1 à 15, caractérisé en ce que l'on dispose dans le circuit de perméat (3) un fermentateur (12) dans lequel le sucre contenu dans le perméat est transformé en alcool, on enlève l'alcool au moins partiellement dans un dispositif (14) consécutif d'élimination de l'alcool ou au moyen d'une extraction par l'amenée d'au moins une autre boisson, et on renvoie de nouveau le perméat débarrassé du sucre et de l'alcool, ou le perméat alcoolisé débarrassé du sucre, dans le circuit de perméat (3) en aval du fermentateur (12).

17. Procédé selon une des revendications 1 à 16, caractérisé en ce que l'installation de séparation à membrane (2) est précédée d'un dispositif de séparation (19), fonctionnant également selon le procédé à membrane, dans lequel on introduit le jus brut, que l'on dirige comme rétentat vers le côté rétentat de l'installation de séparation à membrane (2), avec introduction du perméat contenant les substances aromatisantes dans le rétentat en aval de l'installation de séparation à membrane (2).

18. Procédé selon la revendication 17, caractérisé en ce que le seuil de coupure du dispositif de séparation (19) qui la précède est plus bas que le seuil de coupure de l'installation de séparation à membrane (2), mais se trouve dans le domaine limitrophe d'une osmose inverse et d'une ultrafiltration.

19. Procédé selon une des revendications 1 à 18, caractérisé en ce que l'élimination ou la transformation de la substance s'effectue sur le côté rétentat en aval de l'installation de séparation à membrane (2).

20. Procédé selon la revendication 19, caractérisé en ce que l'on choisit le seuil de coupure de la membrane (4) de l'installation de séparation à membrane (2) de manière que le perméat contienne majoritairement les substances désirées dans le produit final et que le rétentat contienne les substances à éliminer ou à transformer.

21. Procédé selon la revendication 19, caractérisé en ce que, pour la fabrication d'une boisson sans alcool ou à taux d'alcool réduit, on transforme le sucre contenu dans le rétentat par fermentation en alcool, on enlève une partie au moins de l'alcool par un traitement consécutif d'élimination de l'alcool, puis on introduit de nouveau dans le rétentat les substances aromatisantes, extraits, sels et acides contenus dans le perméat.

Fig. 1

Fig. 3

EP 0 377 685 B1

Fig. 2

EP 0 377 685 B1